(19) Europäisches Patentamt

European Patent Office

Office européen des brevets

(11) Veröffentlichungsnummer: **0 270 918 B1**

(12) **EUROPÄISCHE PATENTSCHRIFT**

(45) Veröffentlichungstag der Patentschrift: **03.06.92**

(21) Anmeldenummer: **87117350.6**

(22) Anmeldetag: **25.11.87**

(51) Int. Cl.⁵: **C08F 10/00**, C08F 4/62, C08F 4/02

(54) **Verfahren zum Herstellen von griessförmigen Homo- sowie Copolymerisaten des Ethens mittels eines Chromtrioxid-Katalysatorsystems.**

(30) Priorität: **28.11.86 DE 3640803**

(43) Veröffentlichungstag der Anmeldung:
**15.06.88 Patentblatt 88/24**

(45) Bekanntmachung des Hinweises auf die
Patenterteilung:
**03.06.92 Patentblatt 92/23**

(84) Benannte Vertragsstaaten:
**AT BE DE FR GB IT NL**

(56) Entgegenhaltungen:
**EP-A- 0 050 902**
**EP-A- 0 263 525**
**DE-A- 2 540 277**
**US-A- 2 887 471**

(73) Patentinhaber: **BASF Aktiengesellschaft**
**Carl-Bosch-Strasse 38**
**W-6700 Ludwigshafen(DE)**

(72) Erfinder: **Hemmerich, Rainer, Dr.**
**Veilchenweg 9**
**W-6718 Gruenstadt(DE)**
Erfinder: **Konrad, Rainer, Dr.**
**Gartenweg 7**
**W-6701 Goennheim(DE)**
Erfinder: **Mueller-Mall, Rudolf, Dr.**
**Ulmenweg 39**
**W-6708 Neuhofen(DE)**
Erfinder: **Schweier, Guenther, Dr.**
**Friedrich-Pietzsch-Strasse 14**
**W-6701 Friedelsheim(DE)**
Erfinder: **Gropper, Hans, Dr.**
**Sternstrasse 155**
**W-6700 Ludwigshafen(DE)**

**Beschreibung**

Die vorliegende Erfindung liegt im Rahmen eines Verfahrens zum Herstellen von grießförmigen Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Chromtrioxid-Katalysatorsystems aus

(a) einem Chromtrioxid-Katalysator, der erhalten wird, indem man

(1) einen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10, insbesondere von 100 : 0,3 bis 100 : 3, belädt, und dann

(3) das aus Stufe (2) resultierende Zwischenprodukt in einem wasserfreien, Sauerstoff in einer Konzentration von über 10, insbesondere über 20 Volumenprozent enthaltenden Gasstrom 10 bis 1000, insbesondere 120 bis 720 Minuten auf einer Temperatur von 400 bis 1100, insbesondere 550 bis 950°C, hält, sowie

(b) einem Cokatalysator in Form einer Metallverbindung, mit der Maßgabe, daß das Atomverhältnis Chrom im Chromtrioxid-Katalysator : Metall im Cokatalysator 1 : 0,05 bis 1 : 100 beträgt.

Bei diesem Verfahren ist es wichtig, daß Schwankungen in der Aktivität, d.h. in der zeitbezogenen Ausbeute an Polymerisat, bezogen auf die eingesetzte Menge an Katalysator, sowie in der Kornmorphologie, die mit der Korngrößenverteilung, Schüttichte und Rieselfähigkeit beschrieben werden kann, wie sie etwa durch Verunreinigungen der Einsatzstoffe auftreten können, weitgehend vermieden werden, da diese die Eigenschaften des Polymerisats in ungewollter und unkontrollierbarer Weise beeinflussen. Eine unzureichende Kornmorphologie des Polymergrießes kann die technische Beherrschung der Polymerisationssysteme z.B. durch Bildung von Wandbelägen oder durch ein instabiles Rührbett im Gasphasenprozeß nachteilig beeinflussen. Für eine optimale technische Beherrschung der verschiedenen Polymerisationssysteme werden je nach Polymerisationsverfahren unterschiedliche Anforderungen an die Korngrößenverteilung des Polymerisats gestellt. So ist für das Suspensionsverfahren eine möglichst enge, staub- und grobkornfreie Grießmorphologie von Vorteil. Für das Gasphasenverfahren sollte das Polymerisat auch staubfrei sein. Gegenüber dem Suspensionsverfahren ist im gerührten Gasphasenverfahren ein größerer mittlerer Teilchendurchmesser von Vorteil.

Weiterhin ist es wünschenswert, die vor Beginn der Polymerisation zur Reduktion des Chromtrioxid-Katalysators benötigte Induktionszeit sowie die Empfindlichkeit des Katalysators gegenüber Verunreinigungen der Einsatzstoffe zu verkürzen bzw. zu verringern, um ein problemloses Anfahren der Polymerisationsreaktoren zu gewährleisten.

Es ist bekannt, daß durch Einsatz von aluminiumorganischen Verbindungen, wie Dialkylaluminiumalkoxiden oder Alumoxanen, als Cokatalysatoren bei der Polymerisation mit Chromtrioxid-Katalysatoren sowohl eine weitgehend konstante und insgesamt höhere Aktivität als auch eine hinreichende Beeinflussung der Molmasse durch Wasserstoff möglich ist. Ebenso ist bekannt, daß aluminiumorganische Cokatalysatoren die Induktionszeit durch ihre reduzierende Wirkung verkürzen und somit das Anspringen der Polymerisationsreaktion beschleunigen.

Verfahren dieser Art sind z.B. in den DE-OSen 33 29 015 (≙US S.N. 640 355) und 33 29 016 (≙US S.N. 640 354) repräsentativ beschrieben.

Diese Verfahren haben - ebenso wie in Parallele zu setzende vergleichbare andere Polymerisationsverfahren - den Nachteil, daß die erhaltenen Polymerisate ungünstige morphologische Eigenschaften, z.B. einen hohen Staubanteil oder ein niedriges Schüttgewicht, besitzen, was für die technische Beherrschung der Polymerisationssysteme, die Aufarbeitung der Polymerisate und/oder die Verarbeitbarkeit der Polymerisate nachteilig sein kann. Ein weiterer Nachteil dieser Verfahren liegt in der zu starken Reduktionswirkung der Cokatalysatoren, die ein zu heftiges Anspringen der Reaktion hervorrufen, was zu Katalysatoreinschmelzungen und Belagbildung führen kann.

Hier setzte die Aufgabe an, die zur vorliegenden Erfindung geführt hat: das Verfahren der eingangs definierten Art mit einem Chromtrioxid-Katalysatorsystemso weiterzubilden, daß bei mindestens gleichbleibend hoher Aktivität Polymerisate mit einer steuerbaren, dem jeweiligen Verfahren angepaßten, optimalen Kornmorphologie, d.h. geringen Fein- und Grobkornanteilen sowie hoher Schüttdichte und einer sehr hohen bis mittleren, durch Wasserstoff regelbaren Molmasse, hergestellt werden können sowie ein problemloses Anspringen der Polymerisation im Reaktor ermöglicht wird.

Es wurde gefunden, daß diese Aufgabe gelöst werden kann, wenn bei dem in Rede stehende Verfahren.

(a) als Chromtrioxid-Katalysator ein solcher eingesetzt wird, dessen Trägerstoff eine bestimmte, sehr enge, und in einem bestimmten, ausgewählten Bereich liegende Korngrößenverteilung aufweist und ferner ein bestimmtes Porenvolumen sowie eine bestimmte Oberfläche besitzt, und

(b) als Cokatalysator ein Lithiumalkyl eingesetzt wird.

Gegenstand der vorliegenden Erfindung ist dementsprechend ein Verfahren zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Chromtrioxid-Katalysatorsystems aus

(a) einem Chromtrioxid-Katalysator, der erhalten wird, indem man

(1) einen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtverhältnis Trägerstoff : Chrom von 100 : 0,1 bis 100 : 10, insbesondere von 100 : 0,3 bis 100 : 3, belädt, und dann

(3) das aus Stufe (2) resultierende Zwischenprodukt in einem wasserfreien, Sauerstoff in einer Konzentration von über 10, insbesondere über 20 Volumenprozent enthaltenden Gasstrom 10 bis 1000, insbesondere 120 bis 720 Minuten auf einer Temperatur von 400 bis 1100, insbesondere 500 bis 950°C, hält, sowie

(b) einem Cokatalysator in Form einer Metallverbindung, mit der Maßgabe, daß das Atomverhältnis Chrom im Chromtrioxid-Katalysator : Metall im Cokatalysator 1 : 0,05 bis 1 : 100 beträgt.

Das erfindungsgemäße Verfahren ist dadurch gekennzeichnet, daß

(a) als Chromtrioxid-Katalysator ein solcher eingesetzt wird, dessen Trägerstoff einen Teilchendurchmesser von 50 bis 150 $\mu$m, ein Porenvolumen von 1 bis 3 cm$^3$/g sowie eine Oberfläche von 200 bis 600 m$^2$/g besitzt und

(b) als Cokatalysator ein solcher eingesetzt wird, der besteht aus einem Lithiumalkyl der Formel LiR, worin R steht für eine $C_2$-bis $C_6$-insbesondere eine $C_2$-bis $C_4$-Alkylgruppe, und vor allem die n-Butyl-, sec. -Butyl- bzw. tert.-Butylgruppe.

Wie sich gezeigt hat, läßt sich das erfindungsgemäße Verfahren mit besonderem Erfolg durchführen, wenn ein Chromtrioxid-Katalysatorsystem eingesetzt wird, dessen Chromtrioxid-Katalysator auf einem Trägerstoff (1) basiert, den man erhält, indem man

(1.1) von einem 10 bis 25, vorzugsweise 12 bis 20 und insbesondere 14 bis 20 Gew.% Feststoff (berechnet als Siliziumdioxid) enthaltenden Kieselsäure-Hydrogel ausgeht, das weitgehend kugelförmig ist, einen Teilchendurchmesser im Bereich von 1 bis 8, insbesondere 2 bis 6 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht.

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, insbesondere mindestens 90 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung) und

(1.4) das so gewonnene Xerogel auf Teile mit dem geforderten Durchmesser bringt.

Wie sich weiter gezeigt hat, läßt sich das erfindungsgemäße Verfahren ebenfalls mit besonderem Erfolg durchführen, wenn ein Chromtrioxid-Katalysatorsystem eingesetzt wird, dessen Chromtrioxid-Katalysator auf einem Trägerstoff (1) basiert, den man erhält, indem man in der zweiten Stufe (2) den Trägerstoff aus einer 0,05- bis 5-gew.%igen Lösung von Chromtrioxid in einem $C_3$- bis $C_5$-Alkanon oder einer 0,05- bis 15-gew.%igen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20, vorzugsweise nicht mehr als 5, Gew.% Wasser enthalten darf - heraus unter Verdampfen des Lösungsmittels mit der geforderten Menge Chrom belädt.

Schließlich hat sich gezeigt, daß es für den Erfolg des erfindungsgemäßen Verfahrens optimal ist, mit einem Chromtrioxid-Katalisatorsystem zu arbeiten, dessen Chromtrioxid-Katalysator auf dem vorerwähnten besonders hergestellten Trägerstoff (1) basiert, der seinerseits in Stufe (2) auf die oben geschilderte spezielle Weise beladen worden ist. Das entsprechende Polymerisationsverfahren ist in der UP-PS 4 037 042 beschrieben und soll über den Weg des Zitats ein Teil der Offenbarung der vorliegenden Erfindung sein.

Zu dem beim erfindungsgemäßen Verfahren einzusetzenden Chromtrioxid-Katalysator ist im einzelnen noch das Folgende zu sagen:

Der Katalysator hat erfindungsgemäß zur Grundlage einen feinteiligen, porösen, aus Siliziumdioxid bestehenden bzw. auf Siliziumdioxid basierenden Trägerstoff, der einen Teilchendurchmesser von 50 bis 150 $\mu$m, ein Porenvolumen von 1 bis 3 $cm^3/g$ sowie eine Oberfläche von 200 bis 600 $m^2/g$ besitzt. Unter Trägerstoffen, die auf Siliziumdioxid basieren, werden dabei solche verstanden, die neben Siliziumdioxid bis zu 15 Gewichtsprozent eines oder mehrerer Oxide der Elemente Aluminium, Titan, Zirkon, Molybdän oder Vanadin enthalten.

Im Rahmen der Erfindung wird der Einsatz eines Chromtrioxid-Katalysators bevorzugt, der auf einem Trägerstoff (1) basiert, der - wie oben umschrieben - in vier Staufen (1.1) bis (1.4) erhalten wird.

Zu diesen Stufen ist das Nachstehende zu bemerken:

(1.1) Charakteristisch für diese Stufe ist, daß ein Kieselsäure-Hydrogel eingesetzt wird, das einen relativ hohen Feststoffgehalt hat, weitgehend kugelförmig ist und -insbesondere - auf eine spezielle Weise hergestellt worden ist. Diese spezielle Weise der Herstellung ist in ihren Unterstufen (1.1.1), (1.1.2) sowie (1.1.3) im einzelnen beschrieben z.B. in der US-PS 3,872,217; eine Beschreibung der gleichen Unterstufen und zusätzlich der Unterstufe (1.1.4) findet sich z.B. in der US-PS 4,037,042. Das insoweit in den beiden genannten Patentschriften Offenbarte soll, auf dem Wege über das Zitat, ein Bestandteil der vorliegenden Beschreibung sein; - womit in dieser einschlägige nähere Darlegungen entbehrlich werden.

(1.2) Die Extraktion des Wassers aus dem Kieselsäure-Hydrogel mittels der oben bezeichneten organischen Flüssigkeit kann in üblichen Extraktionsvorrichtungen erfolgen. Geeignete Vorrichtungen sind z.B. Säulenextraktoren. Als organische Flüssigkeiten haben sich aus der Reihe der Alkanole die folgenden (nach abnehmender Wirksamkeit - nicht jedoch nach abnehmender Wirtschaftlichkeit - geordnet) bewährt: tert.-Butanol, i-Propanol, Ethanol und Methanol. Aus der Reihe Alkanone - die insgesamt gegenüber den Alkanolen zu bevorzugen sind - hat sich vor allem Aceton bewährt. Es versteht sich von selbst, daß die organische Flüssigkeit aus einem oder mehreren der in Betracht kommenden Individuen bestehen kann, wobei in jedem Fall die Flüssigkeit vor dem Extrahieren weniger als 5 und vorzugsweise weniger als 3 Gew.% Wasser enthalten sollte.

(1.3) Die Überführung des mit der organischen Flüssigkeit behandelten Gels in das Xerogel (Trocknung) kann wiederum in einschlägig üblichen Trocknungsvorrichtung erfolgen. Dabei erhält man die besten Ergebnisse, wenn man bei Produkttemperaturen von 80 bis 200°C und Drücken von 133,3- 33325 Pa (1 bis 250 Torr) trocknet, wobei man - aus Gründen des Dampfdruckes - einer steigenden Temperatur auch einen steigenden Druck zuordnen sollte et vice versa. Durch strömende Schleppgase, etwa Stickstoff, kann der Trocknungsvorgang - insbesondere bei relativ hohen Drücken - beschleunigt werden.

(1.4) Das Gewinnen von Xerogel-Teilchen mit dem erfindungswesentlichen Teilchendurchmesser von 50 bis 150 $\mu$m kann z.B. erfolgen, indem man das aus Stufe (1.3) erhaltene Produkt schonend - d.h. insbesondere unter Vermeidung der Bildung hoher Feinanteile -mahlt, die Teilchen mit der gesuchten Korngröße mittels luftunterstützter Siebung separiert und das Überkorn in den Mahl-Sieb-Kreislauf zurückführt.

Wie der Trägerstoff (1) in der zweiten Stufe (2) der Katalysatorherstellung mit Chromtrioxid oder einer unter den Bedingungen der Stufe (3) in Chromtrioxid übergehenden Chromverbindung beladen wird, ist nicht generell kritisch; d.h. die Beladung kann in einschlägig üblicher Weise erfolgen. Im Rahmen der Erfindung wird jedoch ein Katalysator bevorzugt, bei dem die Beladung in spezieller - oben umschriebener - Weise erfolgt ist.

Bei dieser speziellen Weise der Beladung kann man zweckmäßigerweise so verfahren, daß man den Trägerstoff (1) in einer Lösung von Chromtrioxid oder einer unter den Bedingungen der Stufe (3) in Chromtrioxid übergehenden Chromverbindung suspendiert (wobei die Mengen so gewählt werden, daß das gewünschte Mengenverhältnis Trägerstoff : Chrom sich ergibt) und unter dauernder, möglichst homogener Durchmischung des Ansatzes dessen flüssige Bestandteile - also Alkanon bzw. Alkanol sowie gegebenenfalls Wasser - abdampft. Hierbei ist es am zweckmäßigsten, bei Temperaturen von 20 bis 150°C und Drücken von 1333- 101308 Pa. (10 bis 760 Torr) zu arbeiten. Nicht kritisch ist, wenn der mit der Chromkomponente beladene Trägerstoff noch eine gewisse Restfeuchte enthält (flüchtige Bestandteile nicht mehr als 20, insbesondere nicht mehr als 10 Gew.%, bezogen auf den Trägerstoff). - Im gegebenen Zusammenhang geeignete Chromkomponenten sind vor allem Chromtrioxid sowie Chromhydroxid, ferner lösliche Salze des dreiwertigen Chroms mit einer organischen oder anorganischen Säure, wie Acetat, Oxalat, Sulfat, Nitrat; besonders geeignet sind solche Salze derartiger Säuren, die beim Aktivieren rückstandsfrei in Chromtrioxid übergehen. Auch können Chromverbindungen in Form von Chelaten eingesetzt werden, wie Chromacetylacetonat.

Die dritte Stufe (3) der Herstellung des Chromtrioxid-Katalysators dient dessen Aktivierung; sie kann in einschlägig üblicher - aus Literatur und Prazis wohlbekannter - Weise durchgeführt werden, d.h. insbesondere unter Bedingungen, die gewährleisten, daß im fertigen Katalysator das Chrom-zumindest teilweise - im sechswertigen Zustand vorliegt.

Kennzeichnendes Merkmal des erfindungsgemäßen Verfahrens ist, daß

(a) als Chromtrioxid-Katalysator ein solcher eingesetzt wird, dessen Trägerstoff eine bestimmte, sehr enge, und im einem bestimmten, ausgewählten Bereich liegende Korngrößenverteilung aufweist, nämlich einen Teilchendurchmesser von 50 bis 150 $\mu$m besitzt - wobei sich Trägerstoffe mit einem Teilchendurchmesser-Bereich von 50 bis 100 sowie von 90 bis 130 $\mu$m als besonders vorteilhaft herausgestellt haben -, und

(b) als Cokatalysator ein Lithiumalkyl der oben näher definierten Formel eingesetzt wird, mit der Maßgabe, daß das Atomverhältnis Chrom im Chromtrioxid-Katalysator : Lithium im Cokatalysator 1 : 0,05 bis 1 : 100, insbesondere 1 : 0,1 bis 1 : 50, beträgt.

Namentliche Beispiele für besonders gut geeignete Cokatalysatoren der bezeichneten Art sind n-Butyllithium, sec.-Butyllithium und tert.-Butyllithium.

Zu den erfindungsgemäßen Verfahren als Ganzem ist schließlich das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, sei es z.B. als Suspensions-Polymerisationsverfahren oder - insbesondere - Trockenphasen - Polymerisationsverfahren im gerührten oder gewirbelten Bett. Die erwähnten technologischen Ausgestaltungen -mit anderen Worten: die technologischen Varianten der Polymerisation von Olefinen nach Phillips - sind aus der Literatur und Praxis wohlbekannt, so daß sich nähere Ausführungen zu ihnen erübrigen. Zu bemerken ist allenfalls noch, daß die Katalysatoren außerhalb oder innerhalb des Polymerisationsgefäßes mit den Cokatalysatoren zusammengebracht werden können; im letztgenannten Fall etwa durch räumlich getrennten Eintrag der Komponenten, die im übrigen in Form einer Suspension (Katalysator) bzw. Lösung (Cokatalysator) gehandhabt werden können.

Des weiteren ist noch zu sagen, daß sich das neue Verfahren vornehmlich zum Herstellung von Homopolymerisaten des Ethens oder Copolymerisaten des Ethens mit $\alpha$-Monoolefin wie Propen, Buten-1, Hexen-1, 4-Methylpenten-1 und Okten-1 mit einer sehr hohen bis mittleren, mittels Wasserstoff regelbaren Molmasse sowie einem sehr geringen Feinstaub- und Grobkornanteil und hoher Schüttdichte und guter Rieselfähigkeit in hoher Ausbeute, bezogen auf die eingesetzte Katalysatormenge und Polymerisationszeit (hohe Aktivität), eignet also Polymerisaten, wie sie z.B. beim Blasformverfahren besondere Anwendung finden. Das Anspringen der Polymerisation im Reaktor erfolgt beim erfindungsgemäßen Verfahren besonders problemlos.

Beispiel 1

Herstellung des Trägerstoffs (Xerogel)

Es wurde eine in der Figur US-PS 3,872,217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkrammer gemessen, 30 mm betrug. Für die primäre Mischzone war demnach das Verhältnis von Länge zu Durchmesser etwa gleich 10. Für die sich anschließende sekundäre Mischzone lag dieses Verhältnis bei 15. Als Spritzmundstück wurde ein flachgedrücktes, leicht nierenförmig ausgebildetes Rohrstück über das Austrittsende des Kunststoffschlauches geschoben.

Beschickt wurde diese Mischvorrichtung mit 325 l/h 33-gew.%iger Schwefelsäure von 20°C einem Betriebsdruck von ca. 3 bar sowie 1100 l/h Wasserglaslösung (hergestellt aus technischem Wasserglas mit 27 Gew.% $SiO_2$ und 8 Gew.% $Na_2O$ durch Verdünnung mit Wasser) mit einem Litergewicht von 1,20 kg/l

5

und einer Temperatur von ebenfalls 20°C mit einem Druck von ebenfalls ca. 3 bar. In der mit dem Kunststoffschlauch ausgekleideten Mischkammer wurde durch fortschreitende Neutralisation ein unbeständiges Hydrosol mit einem pH-Wert zwischen 7 und 8 gebildet, das bis zur vollständigen Homogenisierung noch etwa 0,1 Sekunden in der Nachmischzone verblieb, bevor es durch das Düsenmundstück als flächenförmiger Flüssigkeitsstrahl in die Atmosphäre gespritzt wurde. Der Strahl zerteilte sich während des Fluges durch die Luft in einzelne Tropfen, die infolge der Oberflächenspannung in ein weitgehend kugelige Form übergingen und die noch während ihres Fluges innerhalb ca. einer Sekunde zu Hydrogel-Kugeln erstarrten. Die Kugeln hatten eine glatte Oberfläche, waren glasklar, enthielten etwa 17 Gew.% $SiO_2$ und hatten folgende Kornverteilung:

>8 mm 10 Gewichtsprozent
6 - 8 mm 45 Gewichtsprozent
4 - 6 mm 34 Gewichtsprozent
< 4 mm 11 Gewichtsprozent

Die Hydrogel-Kugeln wurden am Ende ihres Fluges in einem Waschturm aufgefangen, der nahezu vollständig mit Hydrogel-Kugeln gefüllt war, und in dem die Kugeln sofort ohne Alterung mit ca. 50°C warmem, schwach ammoniakalischem Wasser in einem kontinuierlich verlaufenden Gegenstromprozeß salzfrei gewaschen wurden.

Durch Sieben isolierte man die Kugeln, die einen Durchmesser im Bereich von 2 bis 6 mm hatten und füllte 112 kg dieser Kugeln in ein Extraktionsfaß mit Zulauf an der Oberseite, einem Siebboden und einem schwanenhalsförmigen Überlauf, welcher an der Faßunterseite angeschlossen war und den Flüssigkeitsstand im Faß so hoch hielt, daß die Hydrogel-Kugeln vollkommen mit Flüssigkeit bedeckt waren. Dann ließ man solange Ethanol mit einer Geschwindigkeit von 60 l/h zulaufen, bis die Dichte des am Überlauf austretenden Ethanol-Wassergemisches bis 0,826 $g/cm^3$ gesunken war; es waren dann etwa 95 % des in dem Hydrogel enthaltenen Wassers extrahiert.

Die dabei erhaltenen Kugeln wurden bei 180°C unter einem Vakuum von 10 Torr 8 Stunden lang getrocknet; es trat dann unter den genannten Bedingungen während 30 Minuten kein Gewichtsverlust mehr auf.

Anschließend wurden die getrockneten Kugeln mit einer Fächerschlägermühle schonend gemahlen und durch luftunterstütztes Sieben die Xerogel-Teilchen isoliert, die Durchmesser von 50 bis 100 $\mu$m hatten, während die Teilchen, die Durchmesser von über 100 $\mu$m hatten, in den Mahl-Sieb-Kreislauf zurückgeführt wurden.

Herstellung des Katalysators

15 kg des oben beschriebenen Xerogels und 40 Liter einer etwa 1-gew.%igen Lösung von Chromtrioxid in Aceton wurden in einem Doppelkonusmischer gefüllt. Unter Rotation des von außen mit Dampf auf 110°C beheizten Mischers wurde dann im Wasserstrahlvakumm das Aceton abdestilliert.

Das dabei resultierende Produkt wurde in einem Fließbett, welches von Luft durchströmt wurde, für 4 Stunden auf eine Temperatur von 890°C erhitzt und dann wieder abgekühlt. Ab 140°C wurde das Fließbett von Stickstoff durchspült, um Sauerstoffspuren (die bei der Polymeristion stören) zu beseitigen.

Der so gewonnene Katalysator hatte einen analytisch ermittelten Chromgehalt von rund 0,0002 mol/g.

Polymerisation

Es wurde einem 10-l-Druckautoklaven gearbeitet. Dieser wurde auf 102°C aufgeheizt und mehrmals mit Ethen gespült. Unter Rühren wurden dann 5 l i-Butan und 10 ml einer 10 g n-Butyllithium pro l n-Heptan enthaltenden Lösung eingebracht. Nach Erreichen der gewünschten Reaktionstemperatur von 102°C wurden 365 mg des oben beschriebenen Katalysators mittels Stickstoff so eingeschossen, daß der Druck im Autoklaven vor der Ethanzugabe 25 bar betrug. Das gewählte Atomverhältnis von Chrom im Katalysators zu Lithium im Cokatalysators entsprach demnach 1 : 22.

Danach wurde Ethen bis zu einem Gesamtdruck von 42 bar aufgepreßt und bei konstanter Reaktionstemperatur entsprechend dem Fortschreiten der Polymerisation im Druckintervall 40 bis 42 bar nachgepreßt. Die Polymerisation wurde nach einer Reaktionszeit von 90 Minuten durch Entspannen abgebrochen.

Es wurden 2464 g grießförmiges Polymerisat erhalten, entsprechend einer Aktivität von 4500 g Polyethen/g Katalysator ● h.

Das Polyethen hatte folgende Kenndaten:

```
HL-Schmelzindex (HLMI 190°C/21,6 kp, nach DIN 53 735)        13,3 g/10 min.
Grenzviskosität [η] (nach DIN 53 733)                         3,0 dl/g
Schüttdichte (nach DIN 53 468)                              480   g/l
Rieseltest (nach DIN 53 492)                                 41,8 g/sec
Siebanalyse (nach DIN 53 477)
        <125 μm                                               0,2 %
     125- 250 μm                                              2,6 %
     250- 500 μm                                              6,2 %
     500-1000 μm                                             41,3 %
    1000-2000 μm                                             49,2 %
        >2000 μm                                              0,5 %
```

Vergleichsversuch

Es wurde in Identität zum Beispiel 1 (auch hinsichtlich der Messung der Kenndaten) gearbeitet, mit den einzigen Ausnahmen, daß
(a) zur Herstellung des Katalysators Xerogel-Teilchen verwendet wurden, die einen Teilchendurchmesser von 1 bis 300 μm hatten, und
(b) als Cokatalysator nicht n-Butyllithium, sondern die gleiche molare Menge Diethylaluminiumethoxid eingesetzt wurde.
Auf diese Weise entstanden 1260 g Polymerisat, entsprechend einer Aktivität von 2300 g Polyethen/g Katalysator • h, mit folgenden Kenndaten:

```
HL-Schmelzindex                                              15,9 g/10 min.
Grenzviskosität [η]                                           2,8 dl/g
Schüttdichte                                                170   g/l
Rieseltest                                                   14,5 g/sec
Siebanalyse
        <125 μm                                               1,2 %
     125- 250 μm                                              5,9 %
     250- 500 μm                                             12,3 %
     500-1000 μm                                             29,1 %
    1000-2000 μm                                             36,0 %
        >2000 μm                                             15,5 %
```

Gegenüber Beispiel 1 wird im Vergleichsversuch ein Polymerisat mit erheblich niedrigerer Schüttdichte sowie einer breiteren Korngrößenverteilung mit stark erhöhtem Staub- und Grobkornanteil (<125 μm, >2000 μm) erhalten.

Beispiel 2

Es wurde in Identität zum Beispiel 1 gearbeitet, mit der einzigen Ausnahme, daß bei der Herstellung des Katalysators Xerogel-Teilchen mit einem Teilchendurchmesser von 90 bis 130 μm verwendet wurden.
Auf diese Weise wurden 2040 g grießförmiges Polymerisat, entsprechend einer Aktivität von 3730 g Polyethen/g Katalysator • h, mit folgenden Kenndaten erhalten:

7

| | |
|---|---|
| HL-Schmelzindex | 10,2 g/10 min. |
| Grenzviskosität [$\eta$] | 2,8 dl/g |
| Schüttdichte | 395 g/l |
| Rieseltest | 47,6 g/sec |
| Siebanalyse | |
| <125 $\mu$m | 0 % |
| 125- 250 $\mu$m | 1,2 % |
| 250- 500 $\mu$m | 5,2 % |
| 500-1000 $\mu$m | 15,6 % |
| 1000-2000 $\mu$m | 67,3 % |
| >2000 $\mu$m | 10,7 % |

Durch Verwendung eines gegenüber Beispiel 1 größeren Trägerstoffs wurde der Feinanteil im Polymerisat weiter gesenkt. Dies und die gegenüber Beispiel 1 erhöhten Anteile > 2000 $\mu$m prädestinieren einen solchen Katalysator für den Einsatz im Trockenphasen-Polymerisationsverfahren.

**Patentansprüche**

**1.** Verfahren zum Herstellen von grießförmigen Ethen-Homopolymerisaten sowie Ethen-Copolymerisaten mit untergeordneten Mengen an einpolymerisierten $C_3$- bis $C_{12}$-$\alpha$-Monoolefin durch Polymerisation des bzw. der Monomeren bei Temperaturen von 30 bis 150°C und Drücken von 2 bis 150 bar, mittels eines Chromtrioxid-Katalysatorsystems aus

(a) einem Chromtrioxid-Katalysator, der erhalten wird, indem man

(1) einem feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10 belädt, und dann

(3) das aus Stufe (2) resultierende Zwischenprodukt in einem wasserfreien, Sauerstoff in einer Konzentration von über 10 Volumenprozent enthaltenden Gasstrom 10 bis 1000 Minuten auf einer Temperatur von 400 bis 1100°C hält, sowie

(b) einem Cokatalysator in Form einer Metallverbindung, mit der Maßgabe, daß das Atomverhältnis Chrom im Chromtrioxid-Katalysator:Metal im Cokatalysator 1 : 0,05 bis 1 : 100 beträgt, dadurch gekennzeichnet, daß

(a) als Chromtrioxid-Katalysator ein solcher eingesetzt wird, dessen Trägerstoff einen Teilchendurchmesser von 50 bis 150 $\mu$m, ein Porenvolumen von 1 bis 3 cm$^3$/g sowie eine Oberfläche von 200 bis 600 m$^2$/g besitzt, und

(b) als Cokatalysator ein solcher eingesetzt wird, der besteht aus einem Lithiumalkyl der Formel LiR, worin R steht für eine $C_2$-bis $C_6$-Alkylgruppe.

**2.** Verfahren gemäß Patentanspruch 1, dadurch gekennzeichnet, daß ein Chromtrioxid-Katalysatorsystem eingesetzt wird, dessen Chromtrioxid-Katalysator auf einem Trägerstoff (1) basiert, den man erhält, indem man

(1.1) von einem 10 bis 25 Gew.% Feststoff (berechnet als Siliziumdioxid) enthaltenden Kieselsäure-Hydrogel ausgeht, das weitgehend kugelförmig ist, einen Teilchendurchmesser im Bereich von 1 bis 8 mm hat und erhalten wird, indem man

(1.1.1) in einen unter Drall stehenden Strom einer wäßrigen Mineralsäure längs sowie tangential zum Strom eine Natrium-bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-

Alkanole und/oder $C_3$- bis $C_5$-Alkanone mindestens 60 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung) und

(1.4) das so gewonene Xerogel auf Teile mit dem geforderten Durchmesser bringt.

3. Verfahren gemäß Patentansprüchen 1 sowie 2, dadurch gekennzeichnet, daß ein Chromtrioxid-Katalysatorsystem eingesetzt wird, dessen Chromtrioxid-Katalysator auf einem Trägerstoff (1) basiert, den man erhält, indem man in der zweiten Stufe (2) den Trägerstoff aus einer 0,05- bis 5-gew.%igen Lösung von Chromtrioxid in einem $C_3$- bis $C_5$-Alkanon oder einer 0,05- bis 15-gew.%igen Lösung einer unter den Bedingungen der Stufe (3) in Chromtrioxid übergehenden Chromverbindung in einem $C_1$-bis $C_4$-Alkanol -wobei das jeweilige Lösungsmittel nicht mehr als 20 Gew.% Wasser enthalten darf - heraus unter Verdampfen des Lösungsmittels mit der geforderten Menge Chrom belädt.

## Claims

1. A process for preparing a granular ethene homopolymer or copolymer with a minor amount of copolymerized $C_3$-$C_{12}$-$\alpha$-monoolefin by polymerizing the monomer(s) at from 30 to 150°C and under from 2 to 150 bar by means of a chromium trioxide catalyst system comprising

   (a) a chromium trioxide catalyst obtained by

   (1) loading a finely divided, porous carrier material which consists of or is based on silicon dioxide with

   (2) chromium trioxide, or a chromium compound which, under the conditions of stage (3), converts into chromium trioxide, in a weight ratio of carrier material : chromium of from 100 : 0.1 to 100 : 10 and then

   (3) maintaining the intermediate resulting from stage (2) at from 400 to 1100°C in an anhydrous gas stream containing oxygen in a concentration of over 10 - percent by volume for from 10 to 1000 minutes, and also

   (b) a cocatalyst in the form of a metal compound, with the proviso that the atomic ratio of chromium in the chromium trioxide catalyst: metal in the cocatalyst ranges from 1 : 0.05 to 1 : 100,

   wherein

   (a) the chromium trioxide catalyst used has a carrier material having a particle diameter of from 50 to 150 $\mu$m, a pore volume of from 1 to 3 cm$^3$/g and a surface area of from 200 to 600 m$^2$/g, and

   (b) the cocatalyst used consists of a lithiumalkyl of the formula LiR, where R is $C_2$-$C_6$-alkyl.

2. A process as claimed in claim 1, wherein the chromium trioxide catalyst in the chromium trioxide catalyst system used is based on a carrier material (1) obtained by

   (1.1) starting from a silica hydrogel having a solids content (calculated as silicon dioxide) of from 10 to 25% by weight, a substantially spherical shape, and a particle diameter within the range from 1 to 8 mm, and obtained by

   (1.1.1) introducing a sodium waterglass or potassium waterglass solution into a swirling stream of an aqueous mineral acid longitudinally and also tangentially to the stream,

   (1.1.2) spraying the resulting silica hydrosol in droplet form into a gaseous medium,

   (1.1.3) allowing the sprayed hydrosol to solidify to the hydrogel in the gaseous medium and

   (1.1.4) freeing the substantially spherical hydrogel thus obtained from salts by washing, without prior aging,

   (1.2) extracting from the hydrogel (1.1) not less than 60% of the water present in the hydrogel by means of an organic liquid from the series of C,-$C_4$-alkanols and/or $C_3$-$C_5$-alkanones,

   (1.3) drying the resulting dewatered gel which has been treated with the organic liquid until at 180°C under a reduced pressure of 10 mmHg no further weight loss occurs in the course of 30 minutes (xerogel formation) and

   (1.4) the xerogel thus obtained is brought to the desired particle diameter.

3. A process as claimed in claim 1 or 2, wherein the chromium trioxide catalyst in the chromium trioxide catalyst system used is based on a carrier material (1) obtained by loading the carrier material in the second stage (2) with the required amount of chromium from a from 0.05 to 5% strength by weight solution of chromium trioxide in a $C_3$-$C_5$-alkanone or from a from 0.05 to 15% strength by weight solution of a chromium compound which converts into chromium trioxide under the conditions of stage (3), in a $C_1$-$C_4$-alkanol - although in neither case may the solvent contain more than 20% by weight of water - by evaporating the solvent.

## Revendications

1. Procédé de préparation d'homopolymères granuleux d'éthylène et de copolymère granuleux d'éthylène avec des quantités mineures d'α-monooléfines en $C_3$ à $C_{12}$ en liaison polymère, par polymérisation du ou des monomères à des températures de 30 à 150°C et sous des pressions de 2 à 150 bar, à l'aide d'un système catalytique à base de trioxyde de chrome, composé
   (a) d'un catalyseur à base de trioxyde de chrome qui est obtenu
      (1) en chargeant un support poreux finement divisé, constitué par du dioxyde de silicium ou à base de dioxyde de silicium,
      (2) de trioxyde de chrome ou d'un composé du chrome qui se transforme en trioxyde de chrome dans les conditions de l'étape (3), dans un rapport en poids du support au chrome de 100:0,1 à 100:10, puis
      (3) en maintenant le produit intermédiaire résultant de l'étape (2) pendant 10 à 1000 mn à une température de 400 à 1100°C dans un courant de gaz anhydre, contenant de l'oxygène à raison de plus de 10% en volume, ainsi que
   (b) d'un co-catalyseur sous forme d'un composé métallique, étant spécifié que le rapport atomique du chrome dans le catalyseur à base de trioxyde de chrome au metal dans le co-catalyseur est compris entre 1:0,05 et 1:100,
   caractérisé en ce que
   (a) on utilise, comme catalyseur à base de trioxyde de chrome, un catalyseur dont le support a un diamètre de particules de 50 à 150 μm, un volume de pores de 1 à 3 $cm^3$/g et une surface spécifique de 200 à 600 $m^2$/g, et
   (b) on utilise, comme co-catalyseur, un composé qui est constitué par un alkyl-lithium de formule LiR, R étant mis pour un groupement alkyle en $C_2$ à $C_6$.

2. Procédé selon la revendication 1, caractérisé en ce qu'on utilise un système catalytique à base de trioxyde de chrome dont le catalyseur de trioxyde de chrome est fixé sur un support (1) que l'on obtient
   (1.1) en partant d'un hydrogel d'acide silicique qui contient de 10 à 25% en poids de matières solides (calculées en tant que dioxyde de silicium), est sphérique dans une large mesure, a un diamètre de particules dans la gamme de 1 à 8 mm et est obtenu de la manière suivante:
      (1.1.1) on introduit une solution d'orthosilicate de sodium ou de potassium dans un courant d'un acide minéral aqueux mis en giration, longitudinalement et tangentiellement par rapport au courant,
      (1.1.2) on pulvérise en forme de gouttes, dans un milieu gazeux, l'hydrosol d'acide silicique ainsi formé,
      (1.1.3) on laisse l'hydrosol pulvérisé se solidifier en hydrogel dans le milieu gazeux et
      (1.1.4) on débarrasse des sels par lavage l'hydrogel largement sphérique ainsi obtenu, sans vieillissement préalable,
   (1.2) en extrayant de l'hydrogel (1. 1), au moyen d'un liquide organique de la série des alcanols en $C_1$ à $C_4$ et/ou des alcanones en $C_3$ à $C_5$, au moins 60% de l'eau contenue dans l'hydrogel,
   (1.3) en séchant le gel déshydraté et traité par le liquide organique ainsi obtenu, jusqu'à ce qu'à 180°C sous un vide de 10 torr, il ne se produise plus de perte de poids pendant 30 mn (formation de xérogel), et
   (1.4) en appliquant le xérogel ainsi obtenu sur des éléments ayant le diamètre requis.

3. Procédé selon la revendication 1 ou 2, caractérisé en ce qu'on utilise un système catalytique à base de trioxyde de chrome dont le catalyseur de trioxyde de chrome est fixé sur un support (1) que l'on obtient en chargeant le support de la quantité requise de chrome, dans la deuxième étape (2), à partir d'une solution à 0,05-5% en poids de trioxyde de chrome dans une alcanone en $C_3$ à $C_5$ ou à partir d'une solution à 0,05-15% en poids d'un composé du chrome qui se transforme en trioxyde de chrome dans les conditions de l'étape (3) dans un alcanol en $C_1$ à $C_4$ - chaque solution ne devant pas contenir plus de 20% en poids d'eau -, par évaporation du solvant.